# EUROPÄISCHE PATENTANMELDUNG

(11) **EP 2 862 665 A1**
(43) Veröffentlichungstag der Anmeldung: **22.04.2015**
(21) Anmeldenummer: 13189515.3
(22) Anmeldetag: 21.10.2013
(51) Int. Cl.: B23K 26/38, B23K 26/03

(54) **Plasmagesteuerter Strahlprozess und Vorrichtung**

(71) Anmelder: Siemens Aktiengesellschaft, 80333 München (DE)
(72) Erfinder: Burbaum, Bernd, 14612 Falkensee (DE); Ott, Michael, 45470 Mülheim an der Ruhr (DE)

(57) **Zusammenfassung**

Durch die Verwendung eines Plasmadetektors (13) bei Schweißprozessen ist eine wesentlich flexiblere Prozessregelung möglich.

## Beschreibung

Die Erfindung betrifft einen Strahlprozess sowie eine Vorrichtung, bei dem ein Plasma bzw. die Plasmaentwicklung überwacht wird und zur Steuerung verwendet wird.

Metallische Bauteile werden oft mit Löchern versehen, wobei dafür ein Laser oder Elektronenstrahl verwendet wird. Normalerweise wird dabei eine Temperaturmessung durchgeführt, die zur Regelung verwendet wird.

Dies ist jedoch sehr aufwändig und muss über den gesamten Brennfleck erfolgen und teilweise bewertet werden.

Es ist daher Aufgabe der vorliegenden Erfindung, o. g. Vorgehensweise zu vereinfachen.

Die Aufgabe wird gelöst durch ein Verfahren gemäß Anspruch 1 und eine Vorrichtung gemäß Anspruch 8.

In den Unteransprüchen sind weitere vorteilhafte Maßnahmen aufgelistet, die beliebig miteinander kombiniert werden können, um weitere Vorteile zu erzielen.

Die Plasmasteuerung ermöglicht eine einfache Prozessführung.

Es zeigen:
- Figur 1: eine erfindungsgemäße Vorrichtung,
- Figur 2: eine Liste von Superlegierungen,
- Figur 3: eine Turbinenschaufel.

Die Beschreibung und die Figuren stellen nur Ausführungsbeispiele der Erfindung dar.

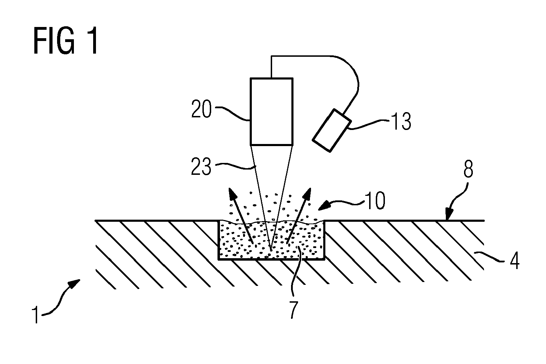

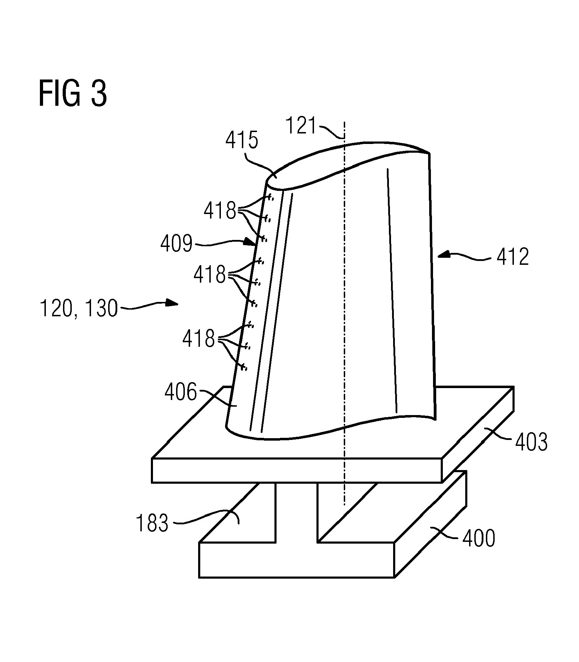

In Figur 1 ist eine erfindungsgemäße Vorrichtung 1 gezeigt. Die Vorrichtung 1 weist eine nicht näher dargestellte Halterung oder Auflage für ein zu bearbeitendes Substrat 4 eines Bauteils 120, 130 (Fig. 3) auf.

Dabei soll in einem Bereich 7 der Oberfläche 8 des Substrats 4 eine Strahlbearbeitung, vorzugsweise eine Abtragung stattfinden.

Dabei kann ein Durchgangsloch erzeugt werden.

Die Vorrichtung 1 kann vorzugsweise eine Laserbohrvorrichtung darstellen.

Mittels eines Energiestrahls 23 einer Strahlquelle 20, vorzugsweise eines Laserstrahls, wird im Bereich 7 der Oberfläche 8 des Substrats 4 Material abgetragen.

Die Strahlquelle 20, hier vorzugsweise ein Laser, ist verbunden mit einer Steuerung und/oder Regelung (nicht dargestellt), die wiederum mit einem Plasmadetektor 13 verbunden ist.

Geeignete Plasmadetektoren sind bekannt, z.B. auf Germanium-Basis.

Beim Herstellen von Löchern, wie z.B. Durchgangslöchern wie z.B. Kühlluftlöchern bei Turbinenschaufeln, die auch noch einen Diffusor im Austrittsbereich aufweisen, soll ein Plasma des abzutragenden Materials erzeugt werden.

Bei dieser Art von Materialabtrag mittels eines Lasers wird kein Schutzgas verwendet, sondern lediglich Druckluft, d.h. Umgebungsluft, um das Material aus dem herzustellenden Loch heraus zutreiben. Eine Ionisierung oder ein Plasma der Druckluft aus der Umgebungsluft wird nicht detektiert.

Bei einem Materialabtrag mittels Strahlprozess kann die Plasmaentwicklung gezielt gesteuert und in ihrer Stärke gesteuert und/oder geregelt werden, d.h. wird kein Plasma mehr detektiert, wird der Prozess so gesteuert, dass der Energieeintrag wieder höher wird, insbesondere durch eine Leistungserhöhung der Schweißquelle.

Das Substrat 4 kann beim Materialabtrag vorzugsweise auch ein Schichtsystem darstellen, d.h. es wird vorzugsweise Material einer keramischen und/oder metallischen Schicht eines Substrats 4 abgetragen.

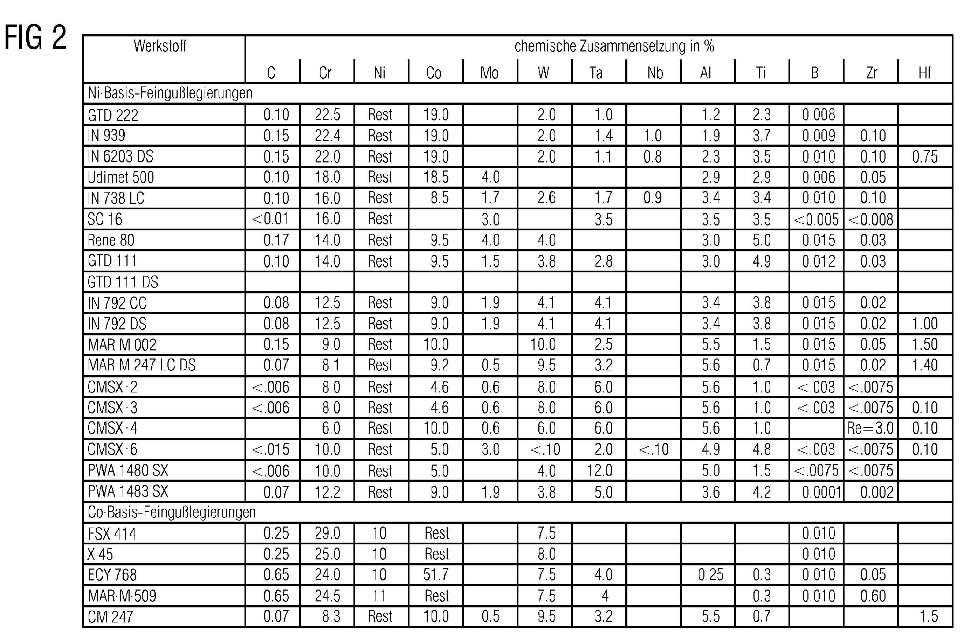

Das Substrat 4 ist vorzugsweise metallisch und weist vorzugsweise eine nickel- oder kobaltbasierte Legierung, insbesondere gemäß Figur 2 auf.

Diese Regelung mittels Plasmadetektor 13 ist wesentlich flexibler und erlaubt es wegen der geringen Größe sich gut in vorhandene Prozessverfahrenssysteme zu integrieren. Insbesondere ist die Bewertung hier einfacher, denn sobald sich ein Plasma 10 reduziert, tritt die Regelung ein, wobei dann der Energieeintrag in das Substrat 4 erhöht wird.

## Patentansprüche

1. Verfahren
zur Strahlbearbeitung eines Substrats (4),
bei dem ein Energiestrahl (23) einer Strahlquelle (20) Material von einem Substrat (4) abträgt und
wobei ein Plasmadetektor (13) zur Regelung für die Steuerung der Strahlquelle (20) verwendet wird.

2. Verfahren nach Anspruch 1,
bei dem der Energiestrahl ein Laserstrahl ist.

3. Verfahren nach einem oder beiden der Ansprüche 1 oder 2, bei dem ein Loch,
insbesondere ein Durchgangsloch erzeugt wird.

4. Verfahren nach einem oder mehreren der Ansprüche 1, 2 oder 3,
bei dem Druckluft im Bereich (7) des Materialabtrags eingeblasen wird.

5. Verfahren nach einem oder mehreren der Ansprüche 1 bis 4,
bei dem kein Schutzgas und kein Argon und kein Helium und kein Wasserstoff im abzutragenden Bereich (7) des Substrats (4) zugeführt wird.

6. Verfahren nach einem oder mehreren der Ansprüche 1 bis 5,
bei dem ein Abtragungsprozess von einem unbeschichteten oder beschichteten Substrat (4) stattfindet.

7. Verfahren nach einem oder mehreren der Ansprüche 1 bis 6,
bei dem die Energie des Energiestrahls (23) erhöht wird, wenn kein Plasma (10) mehr detektiert wird.

8. Vorrichtung (1) zur Strahlbearbeitung,
die zumindest aufweist
eine Halterung oder Auflage für ein zu bearbeitendes Bauteil (4),
eine Strahlquelle (20),
die Energiestrahlen (23) erzeugen kann,
die über eine Regelung (15) gesteuert werden kann, **dadurch gekennzeichnet, dass**
ein Plasmadetektor (13) vorhanden ist,
der zur Regelung für die Steuerung der Strahlquelle (20) verwendet werden kann.

9. Vorrichtung nach Anspruch 8,
die eine Druckluftquelle aufweist,
aus der Druckluft in den Bereich (7) des abzutragenden Materials geblasen werden kann.

10. Vorrichtung nach einem der beiden Ansprüche 8 oder 9, bei dem keine Mittel vorhanden sind, die ein Schutzgas wie Argon, Helium oder Wasserstoff im Bereich des Materialabtrags leiten.
